(19) **Europäisches Patentamt / European Patent Office / Office européen des brevets**

(11) **EP 1 388 222 B1**

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(21) Anmeldenummer: **02737789.4**

(22) Anmeldetag: **12.04.2002**

(51) Int Cl.:
**H04B 7/06** (2006.01)

(86) Internationale Anmeldenummer:
**PCT/DE2002/001381**

(87) Internationale Veröffentlichungsnummer:
**WO 2002/093783 (21.11.2002 Gazette 2002/47)**

(54) **CLOSED-LOOP-ANTENNENDIVERSITÄTSVERFAHREN IN EINEM ZELLULAREN FUNK-KOMMUNIKATIONSSYSTEM**

CLOSED-LOOP ANTENNA DIVERSITY IN A CELLULAR RADIO COMMUNICATION SYSTEM

PROCEDE DE DIVERSITE D'ANTENNES EN BOUCLE FERMEE DANS UN SYSTEME DE RADIOCOMMUNICATION CELLULAIRE

(84) Benannte Vertragsstaaten:
**DE FR GB**

(30) Priorität: **15.05.2001 DE 10123611**

(43) Veröffentlichungstag der Anmeldung:
**11.02.2004 Patentblatt 2004/07**

(60) Teilanmeldung:
**08002659.4 / 1 919 099**

(73) Patentinhaber: **SIEMENS AKTIENGESELLSCHAFT
80333 München (DE)**

(72) Erfinder:
• **RAAF, Bernhard
81475 München (DE)**
• **WIEDMANN, Ralf
81369 München (DE)**
• **BRANDES, Denis
38176 Wendeburg (DE)**

(56) Entgegenhaltungen:
**WO-A-00/72464     WO-A-01/28128**

• **"Universal Mobile Telecommunications System (UMTS); Physical layer procedures (FDD) (3G TS 25.214 version 3.1.1 Release 1999)" ETSI TS 125 214 V3.1.1 (2000-01), Januar 2000 (2000-01), XP002207980 in der Anmeldung erwähnt**

EP 1 388 222 B1

**Beschreibung**

Die Erfindung betrifft ein Verfahren zum Betreiben eines zellularen Funk-Kommunikationsystems, das Antennendiversität und zeitweilige Übertragungsunterbrechungen unterstützt, sowie Teilnehmer- und Basisstationen für ein solches System.

In einem Funk-Kommunikationsystem mit Antennendiversität, in dem zwei Stationen miteinander per Funk kommunizieren, ist wenigstens eine dieser Stationen mit einer Mehrzahl von Antennen ausgestattet und in der Lage, ein an die jeweils andere Station zu übertragendes Funksignal über die einzelnen Antennen jeweils gewichtet mit den Koeffizienten eines Gewichtungsvektors auszustrahlen, um so eine selektiv auf diese andere Station ausgerichtete Richtcharakteristik des Funksignals zu realisieren. Die zum erfolgreichen Ausrichten des Gewichtungsvektors benötigten Informationen werden von der anderen Station gemessen und als eine Rückkopplungsinformation an die erste Station geliefert.

Ein bekanntes System, das in dieser Weise arbeitet, ist das UMTS-Mobilfunksystem. Dieses System verfügt neben Open-Loop Betriebszuständen, die keine Rückkopplungsinformation benötigen, über zwei Betriebszustände mit Closed-Loop Antennendiversität, als Closed-Loop-Mode 1 und 2 bezeichnet. In einem Betriebszustand ohne Closed-Loop-Antennendiversität führen die Teilnehmerstationen des UMTS-Systems im allgemeinen nicht die Messungen aus, die für die Bestimmung der Rückkopplungsinformation erforderlich sind, da diese in einem Open-Loop-Betriebszustand nicht benötigt wird oder eventuell auch gar nicht gemessen werden kann. Wenn jedoch in einen Zustand mit Closed-Loop Antennendiversität umgeschaltet wird, so muss von Anfang an ein Gewichtungsvektor vorliegen, den die Basisstation zum Senden an die Teilnehmerstationen verwenden kann. Es sind daher für die beiden Betriebszustände mit Closed-Loop Antennendiversität Default-Gewichtungsvektoren vordefiniert, die während des ersten Zeitschlitzes nach dem Übergang in einen Antennendiversitätsbetriebszustand verwendet werden und die in dem Maße, wie die Teilnehmerstation die Rückkopplungsinformation an die Basisstation liefern, durch aktuelle Gewichtungsvektoren ersetzt werden.

Allgemein sei auf das Kapitel 8 der technischen Spezifikation ETSI TS 125 214 V3.1.1 (2000-01) "Physical Layer Procedures (FDD)" (3G TS 25.214 version 3.1.1 Release 1999) verwiesen.

Der Übergang in einen Antennendiversitätsbetriebszustand kann sich sowohl auf die gesamte Basisstation und allen zu dieser Basisstation in Verbindung stehenden Teilnehmerstationen beziehen als auch auf eine einzelne Teilnehmerstation die in Verbindung mit einer Basisstation steht. Letzterer ist der in der Praxis häufiger auftretende Fall.

Nach dem Übergang in einen der Zustände in Closed-Loop Antennendiversität geht die UMTS-Basisstation davon aus, dass in einem Uplink-Signal, das sie von einer Teilnehmerstation empfängt, Rückkopplungsinformation enthalten ist, anhand derer sie in der Lage ist, einen aktuellen Gewichtungsvektor auszuwählen, der an die tatsächlichen Empfangsbedingungen der Teilnehmerstation gut angepasst ist.

Zeitweilige Unterbrechungen des Uplink- und Downlink-Signals können in Mobilfunk-Kommunikationssystemen erforderlich sein, um es einer Teilnehmerstation zu ermöglichen, Feldstärkemessungen an Funksignalen benachbarter Basisstationen durchzuführen und zu überprüfen, ob eine dieser benachbarten Basisstationen möglicherweise bessere Empfangsbedingungen liefert als die hier als Partnerstation bezeichnete Basisstation, mit der die Teilnehmerstation gegenwärtig kommuniziert.

Bei einer einfachen Teilnehmerstation, bei der Sende- und Empfangsteil nicht unabhängig voneinander abstimmbar sind, muss während der Messungen am Signal der benachbarten Station auch das Sendeteil verstimmt werden, so dass hier Unterbrechungen im Downlink und Uplink jeweils zeitgleich auftreten.

In einem solchen Fall kann nach Ende der Unterbrechung der Closed-Loop-Betriebszustand in der gleichen Weise initialisiert werden wie wenn aus einem anderen Betriebszustand in einen Zustand mit Closed-Loop-Antennendiversität umgeschaltet wird.

Um einer Teilnehmerstation mit einem einzigen Empfangsteil Messungen an den Signalen benachbarter Basisstationen zu ermöglichen, ist eine Unterbrechung des Downlink-Signals unvermeidlich, da das Empfangsteil zur Durchführung der Messungen auf die Frequenz der benachbarten Basisstation abgestimmt werden muss und in dieser Zeit das Signal der Partnerstation nicht verfolgen kann. Wenn das Sendeteil der Teilnehmerstation unabhängig vom Empfangsteil abstimmbar ist, so kann während der Downlink-Unterbrechung im Uplink weiter übertragen werden.

Bei einer Teilnehmerstation mit mehreren Empfangsteilen, von denen eines ständig auf das Downlink-Signal der Partnerstation abgestimmt bleiben kann und das zweite für Messungen an benachbarten Basisstationen einsetzbar ist, sind Downlink-Unterbrechungen nicht erforderlich. Es können aber zeitweilige Unterbrechungen des Uplink-Signals notwendig sein, wenn das Senden des Uplink-Signals die durchzuführenden Messungen z.B. aufgrund nahe benachbarter Frequenzen stören würde.

Um die Übertragungskapazität eines Mobilfunk-Kommunikationssystems optimal zu nutzen, ist es natürlich wünschenswert, das Ausmaß der Unterbrechungen von Uplink- oder Downlink, die mit den Messungen an den Signalen der Nachbarstationen einhergehen, so weit wie möglich zu beschränken und voneinander unabhängige Unterbrechungen nur im Uplink oder nur im Downlink zuzulassen. Dies wirft jedoch mehrere Probleme auf. Zum einen kann während einer Uplink-Unterbrechung die Teilnehmerstation nicht die Rückkopplungsinformation liefern, die die Basisstation benötigt, um das Downlink-Signal an diese Teilnehmerstation weiter senden zu können. Zum anderen ist die Teilnehmerstation nicht in der Lage während einer Downlink-Unterbrechung die erforderlichen Messungen durchzuführen, die zur Festlegung der Rückkopplungsinformation erforderlich sind.

Darüber hinaus ist noch der Fall zu berücksichtigen, dass ein Übergang in einen Betriebszustand mit Closed-Loop-Antennendiversität in eine Unterbrechung der Uplink- und/oder Downlink-Übertragung fällt. Egal ob nur Uplink, nur Downlink oder beide unterbrochen sind, steht vom Beginn des Closed-Loop-Betriebszustands bis zum Ende der Unterbrechung der Basisstation keine aktuelle Rückkopplungsinformation zur Verfügung, anhand derer sie die Strahlformung steuern könnte.

Aus den genannten Gründen ist bei dem herkömmlichen UMTS-System ein optimaler Übergang zwischen Betriebszuständen mit und ohne Closed-Loop Antennendiversität nur möglich, wenn die Kommunikation der Basisstation mit den von dem Übergang betroffenen Teilnehmerstationen nicht gerade unterbrochen ist. Dies zu gewährleisten verkompliziert erheblich den Wechsel zwischen Betriebszuständen mit und ohne Closed-Loop Antennendiversität. Wenn eine Basisstation eine große Zahl von Teilnehmerstationen versorgt, so ist es praktisch nicht möglich, für alle Teilnehmerstationen gleichzeitig eine Betriebszustandsänderung zu vollziehen, da meist immer eine darunter sein wird, deren Kommunikation zeitweilig unterbrochen ist.

Aufgabe der vorliegenden Erfindung ist, ein Verfahren zum Betreiben eines zellularen Funk-Kommunikationsystems sowie eine Teilnehmerstation für ein solches System anzugeben, die Unterbrechungen des Uplink- und Downlinksignals unabhängig voneinander und zu beliebigen Zeitpunkten unterstützen und die auf einfache Weise und ohne Rücksicht auf eventuelle Übertragungsunterbrechungen einen Wechsel des Systems zwischen Zuständen mit und ohne Closed-Loop Antennendiversität ermöglichen.

Diese Aufgabe wird gelöst durch das Verfahren nach Patentanspruch 1 sowie durch die Teilnehmerstation nach Anspruch 3. Weiterbildungen der Erfindung sind in abhängigen Patentansprüchen offenbart

Wenn bei einer Uplink-Unterbrechung im Downlink weiterübertragen werden soll, so ist vorgesehen, dass die Basisstation das Downlink-Signal so lange mit einem vorab festgelegten Gewichtungsvektor gewichtet, bis sie nach Ende der Unterbrechung eine neue Rückkopplungsinformation empfängt.

Bei dem festgelegten Gewichtungsvektor kann es sich zweckmäßigerweise um den durch die letzte von der Basisstation vor der Unterbrechung empfangene Rückkopplungsinformation repräsentierten Gewichtungsvektor handeln.

Bei einem Funkkommunikationssystem, das zwischen einem Betriebszustand ohne Closed-Loop-Antennendiversität und dem Betriebszustand mit Closed-Loop-Antennendiversität umschaltbar ist, kann es vorkommen, das ein solcher Vektor nicht existiert, weil erst im Laufe der Unterbrechung des Uplink-Signals in den Betriebszustand mit Closed-Loop-Antennendiversität umgeschaltet worden ist. In solchen Systemen ist im allgemeinen ein Default-Gewichtungsvektor definiert, der zum Gewichten des Downlink-Signals im ersten Zeitschlitz nach dem Umschalten genutzt wird, wenn noch keine Rückkopplungsinformation an der Basisstation vorliegt. In diesem Falle ist der festgelegte Gewichtungsvektor zweckmäßigerweise mit dem Default-Vektor identisch.

Wenn der festgelegte Gewichtungsvektor der durch die letzte von der Basisstation vor der Unterbrechung empfangene Rückkopplungsinformation repräsentierte Gewichtungsvektor ist, ergeben sich verschiedene Varianten. Wenn die Rückkopplungsinformation aus einer Mehrzahl von Bits bestehende Worte umfasst, die auf eine Mehrzahl von Zeitschlitzen des Uplink-Signals verteilt geliefert werden, so kann als die letzte empfangene Rückkopplungsinformation das letzte vollständige Wort der Rückkopplungsinformation aufgefasst werden, das vor der Unterbrechung des Uplink-Signals geliefert wurde. D. h. ein Teil eines Rückkopplungswortes, der unmittelbar vor der Unterbrechung übertragen wurde, bleibt bei der Festlegung des Gewichtungsvektors unberücksichtigt. Alternativ kann als die letzte empfangene Rückkopplungsinformation auch das letzte Wort der Rückkopplungsinformation aufgefasst werden, mit dessen Lieferung vor der Unterbrechung des Uplink-Signals begonnen wurde, selbst wenn es nicht vollständig übertragen wurde. Eine solche Vorgehensweise ist z. B. bei einem UMTS-System geeignet, wenn der Betriebszustand mit Closed-Loop-Antennendiversität der Closed-Loop-Mode 2 ist.

Wenn bei einer Downlink-Unterbrechung die Uplink-Übertragung fortgesetzt werden soll, so liefert erfindungsgemäß die Teilnehmerstation im Uplink-Signal Rückkopplungsinformation an die Basisstation, die einen vor der Unterbrechung festgelegten Gewichtungsvektor repräsentiert. Die Auswertung des Uplink-Signals an der Basisstation ist dann unabhängig von eventuellen Downlink-Unterbrechungen stets die gleiche.

Gemäß einer Ausgestaltung der Erfindung kann der Basisstation des Funk-Kommunikationsystems nach Übergang in einen Betriebszustand mit Closed-Loop Antennendiversität sofort Rückkopplungsinformation zur Verfügung gestellt werden, die dieser die Festlegung eines Gewichtungsvektors und die Anwendung des Gewichtungsvektors für ein gerichtetes Senden ermöglichen, unabhängig davon, ob die Teilnehmerstation nach dem Übergang in den Betriebszustand mit Closed-Loop Antennendiversität bereits Gelegenheit gehabt hat, eine zum Erstellen von aktueller Rückkopplungsinformation erforderliche Messung durchzuführen oder nicht. Wenn die Gelegenheit nicht bestanden hat, und so lange sie noch nicht besteht, liefert die Teilnehmerstation Rückkopplungsinformation an die Basisstation, die einen bereits vor dem Übergang in den Betriebszustand mit Closed-Loop Antennendiversität festgelegten Gewichtungsvektor repräsentiert.

Einer ersten einfachen Alternative zufolge handelt es sich dabei um Rückkopplungsinformation, die exakt denjenigen Gewichtungsvektor repräsentiert, der in herkömmlicher Weise als Default-Vektor im ersten Zeitschlitz nach dem Übergang in den Betriebszustand mit Closed-Loop Antennendiversität verwendet wird.

Im UMTS-Standard (Spezifikation TS25.214 der 3GPP) sind zwei Betriebszustände mit Closed-Loop Antennendiversität vorgesehen, die als Closed-Loop-Mode 1 und Closed-Loop-Mode 2 bezeichnet werden. Im Closed-Loop-Mode 1 wird ein Default-Gewichtungsvektor mit der Form $w^{(0)} = (1/\sqrt{2}; \frac{1}{2}(1+j))$ verwendet. Dieser Gewichtungsvektor bleibt unverändert, so lange als Rückkopplungsinformation Bits mit dem Wert 0 übertragen werden.

Eine zweite Alternative ist, dass der bekannte Gewichtungsvektor derjenige Vektor oder einer der Vektoren aus einem bekannten endlichen Satz von verfügbaren Vektoren ist, der mit dem vorgegebenen Gewichtungsvektor die größte Ähnlichkeit aufweist. Diese Alternative des Verfahrens ist anwendbar auf den Closed-Loop-Mode 2 des UMTS-Systems. In diesem Betriebszustand wird als Rückkopplungsinformation ein Vier-Bit-Wort übertragen, das neben drei Bits, die die Phasendifferenz der von den zwei Antennen der Basisstation abgestrahlten Signale definieren, auch eine Angabe über deren relative Leistung enthält; diese Leistungen können zueinander im Verhältnis 0,8:0,2 oder 0,2:0,8 stehen. Der im Closed-Loop-Mode 2 verwendete Default-Vektor sieht jedoch ein Intensitätsverhältnis von 0,5:0,5 vor. Es ist also nicht möglich, eine Rückkopplungsinformation an die Basisstation zu liefern, die zur Beibehaltung des Default-Gewichtungsvektors führen würde. In einem solchen Fall wird man die Rückkopplungsinformation zweckmäßigerweise so festlegen, dass sie unter den diversen der Basisstation zu Gebote stehenden Gewichtungsvektoren denjenigen oder einen derjenigen repräsentiert, der die größte Ähnlichkeit zum Default-Gewichtungsvektor aufweist.

In einem Funk-Kommunikationsystem wie dem UMTS-System, das mehrere Betriebszustände mit Closed-Loop-Antennendiversität unterstützt, kann es der einfacheren Implementierung halber auch wünschenswert sein, die vor dem Vorliegen einer aktuellen Messung zu übertragende Rückkopplungsinformation so festzulegen, dass unabhängig davon, welcher der Betriebszustände mit Closed-Loop-Antennendiversität gewählt worden ist, die gleiche Rückkopplungsinformation geliefert wird.

Eine dritte Alternative ist, dass, aus welchen Gründen auch immer, kurz vor dem Umschalten in einen Betriebszustand mit Closed-Loop-Antennendiversität die Teilnehmerstation eine Messung am Downlink-Signal der Basisstation durchgeführt hat. In einem solchen Fall kann natürlich sofort die sich aus dieser Messung ergebende Rückkopplungsinformation an die Basisstation geliefert werden.

Das Verfahren wird vorzugsweise in einem UMTS-Funk-Kommunikationsystem eingesetzt. Hier ermöglicht es eine Initialisierung des Gewichtungsvektors für den nach dem geltenden Standard noch nicht behandelten Fall, dass ein Übergang in einen Betriebszustand mit Closed-Loop-Antennendiversität mit einer Unterbrechung des Downlink-Signals zusammenfällt, so dass die von der Basisstation benötigte Rückkopplungsinformation von der Teilnehmerstation nicht ermittelt werden kann.

Vorzugsweise besteht die in einem solchen Fall bis zum Ende der Downlink-Unterbrechung gelieferte Rückkopplungsinformation aus Nullen.

Wenn der Betriebszustand mit Antennendiversität der Closed-Loop-Mode 1 des UMTS-Systems ist, so führt das Senden von Nullen dazu, dass die Basisstation den zum Ausstrahlen eines ersten Zeitschlitzes nach dem Übergang in den Closed-Loop-Mode 1 vorgegebenen Default-Gewichtungsvektor $w^{(0)} = (1/\sqrt{2}; \frac{1}{2}(1+j))$ so lange verwendet, bis die Teilnehmerstation eine Messung durchgeführt hat, die einen anderen Gewichtungsvektor als besser geeignet erscheinen lässt und die diesbezügliche Rückkopplungsinformation an die Basisstation übertragen worden ist. Wenn der Betriebszustand mit Rückkopplung der Closed-Loop-Mode 2 ist, so ist es unmöglich, den für den ersten Zeitschlitz nach Übergang in den Closed-Loop-Mode 2 verwendeten Gewichtungsvektor $(\frac{1}{2}; -\frac{1}{2})$ erneut zu verwenden, nachdem ein komplettes Wort der Rückkopplungsinformation übertragen worden ist. Die Rückkopplungsinformation erlaubt es lediglich, relative Leistungen der zwei Antennenelemente von 0,2:0,8 bzw. 0,8:0,2 zu spezifizieren. Unter den Gewichtungsvektoren, die im Closed-Loop-Mode 2 zur Verfügung stehen, sind die Vektoren (0,2; -0,8) oder (0,8;-0,2) dem Default-Gewichtungsvektor am ähnlichsten, denn sie weisen die gleiche relative Phasenlage der Vektorkomponenten auf. Sie sind nach UMTS-Standard mit Rückkopplungsinformationswörtern 0000 bzw. 0001 anwählbar. Der einfacheren Implementierbarkeit halber wird man in Closed-Loop-Mode 1 und 2 nur Nullen als Rückkopplungsinformation übertragen.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1        ein Blockdiagramm eines UMTS-Funk-Kommunikationssystems, in dem die vorliegende Erfindung anwendbar ist;

Fig. 2        den zeitlichen Verlauf von Uplink- und Downlink-Signal in dem Fall, dass das UMTS-System auf Closed-Loop-Mode 1 wechselt, während sowohl Uplink- als auch Downlink-Signal unterbrochen sind;

Fig. 3      den zeitlichen Verlauf von Uplink- und Downlink-Signal, wenn der Wechsel auf Closed-Loop-Mode 1 während einer Unterbrechung nur des Downlink-Signals stattfindet;

Fig. 4      den zeitlichen Verlauf dieser Signale, wenn der Wechsel auf Closed-Loop-Mode 1 während einer Unterbrechung nur des Uplink-Signals stattfindet;

Fig. 5      den zeitlichen Verlauf von Uplink- und Downlink-Signal, wenn das System während einer Downlink-Unterbrechung in Closed-Loop-Mode 2 übergeht;

Fig. 6 und 7      zwei Varianten des zeitlichen Verlaufs von Uplink- und Downlink-Signal bei einer Unterbrechung des Uplinks nach Übergang in den Closed-Loop-Mode 1 oder 2.

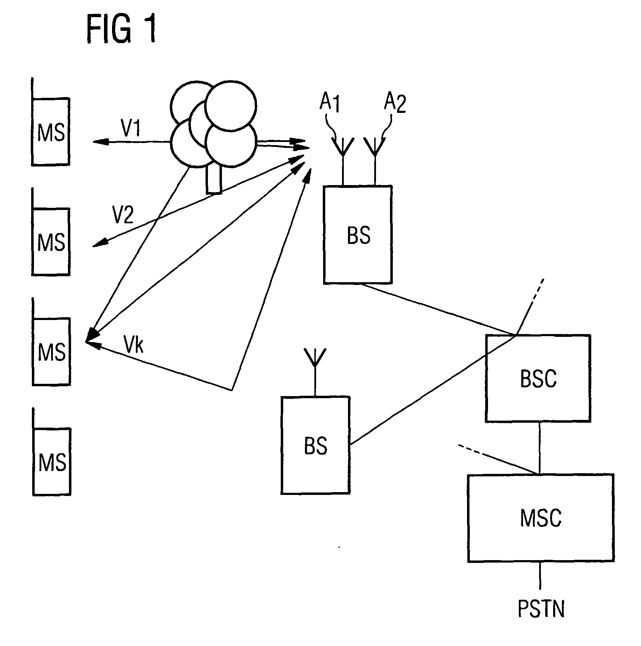

Fig. 1 zeigt die Struktur eines Funk-Kommunikationsystems, in dem die vorliegende Erfindung anwendbar ist. Es besteht aus einer Vielzahl von Mobilvermittlungsstellen MSC, die untereinander vernetzt sind bzw. Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Sie ist mit einer Antenneneinrichtung ausgerüstet, die mehrere Antennen, hier zwei Antennen $A_1$, $A_2$ umfasst. Diese Antennen $A_1$, $A_2$ werden von der Basisstation BS mit einem für eine bestimmte Teilnehmerstation MS vorgesehenen Downlink-Signal beaufschlagt, wobei zumindest während der Ausstrahlung der Nutzdaten des Downlink-Signals dieses multipliziert mit Koeffizienten $w_1$, $w_2$, eines Gewichtungsvektors W auf die Antennen $A_1$, $A_2$ gegeben wird, um das Downlink-Signal gezielt auf die betreffende Basisstation MS auszurichten.

Die Teilnehmerstationen MS sind durch Messungen, die sie an dem Downlink-Signal durchführen, in der Lage, eine optimale Phasen- und Intensitätsbeziehung zwischen den von den zwei Antennen $A_1$, $A_2$ abgestrahlten Anteilen des Downlink-Signals abzuschätzen, der einen Empfang des Downlink-Signals mit maximaler Feldstärke erlaubt. Die Technik zur Durchführung solcher Messungen ist bekannt und wird, da sie nicht Teil der Erfindung ist, hier nicht erläutert.

Im folgenden wird als Beispiel ein Funk-Kommunikationsystem nach dem UMTS-Standard betrachtet. Ein solches System verfügt neben Betriebsartsarten ohne Antennendiversität bzw. mit O-pen-Loop-Antennendiversität über zwei Betriebsarten mit Closed-Loop-Antennendiversität, als Closed-Loop-Mode 1 und Closed-Loop-Mode 2 bezeichnet, die sich im Format der Rückkopplungsinformation unterscheiden, die von den Teilnehmerstationen MS an die Basisstation BS übermittelt wird, um dieser den Gewichtungsvektor W anzugeben, mit dem das Downlink-Signal gewichtet werden sollte, um jeweils an einer Teilnehmerstation MS optimal empfangbar zu sein.

Im UMTS-System sind Uplink- und Downlink-Signal in Rahmen unterteilt, die jeweils fünfzehn Zeitschlitze für die Nutzdatenübertragung zwischen Basisstation BS und Teilnehmerstation MS vorsehen. Im Uplink-Signal steht in jedem dieser Zeitschlitze ein Bit für die Übertragung von Rückkopplungsinformation zur Verfügung.

Im Closed-Loop-Mode 1 verwendet die Teilnehmerstation MS den von beiden Antennen $A_1$, $A_2$ der Basisstation BS ausgestrahlten Kanal CPICH, um eine mit Hilfe des Gewichtungsvektors an den von diesen zwei Antennen ausgestrahlten Downlink-Signal vorzunehmende Phasenanpassung zu berechnen. Diese Berechnung wird zu jedem Zeitschlitz durchgeführt, in dem die Basisstation BS das Downlink-Signal sendet. Die Teilnehmerstation MS bildet aus der gemessenen optimalen Phasenanpassung $\phi$ eine quantisierte Phasenanpassung $\phi_Q$ nach der Formel

$$\phi_Q = \begin{cases} \pi & wenn \quad \pi/2 < \phi - \phi_r(i) \le 3\pi/2\pi \\ 0 & sonst \end{cases} \qquad (1)$$

wobei

$$\phi(i)_t = \begin{cases} 0 & wenn \quad i = 0,2,4,6,8,10,12,14 \\ \pi/2 & wenn \quad i = 1,3,5,7,9,11,13 \end{cases} , \qquad (2)$$

wobei i die Nummer eines Zeitschlitzes in einem Rahmen angibt. Wenn $\phi_Q=0$, sendet die Teilnehmerstation MS ein Rückkopplungsinformationsbit mit dem Wert "0", wenn $\phi_Q=\pi$ ist, wird der Wert "1" gesendet. Die Basisstation berücksichtigt bei der Festlegung des von ihr verwendeten Gewichtungsvektors $W=(w_1, w_2)$ jeweils das letzte und vorletzte Bit der Rückkopplungsinformation nach folgender Formel

$$w_1 = 1/\sqrt{2}$$

$$w_2 = \frac{\sum_{i=n-1}^{n}\cos(\phi_i)}{2} + j\frac{\sum_{i=n-1}^{n}\sin(\phi_i)}{2} \qquad (3)$$

wobei $\phi_i$ die Werte 0, π, π/2, -π/2 gemäß nachfolgender Tabelle annehmen kann:

(Tabelle 1)

| i | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| $\phi_Q=0$ | 0 | π/2 | 0 | π/2 | 0 | π/2 | 0 | π/2 | 0 | π/2 | 0 | π/2 | 0 | π/2 | 0 |
| $\phi_Q=1$ | π | -π/2 | π | -π/2 | π | -π/2 | π | -π/2 | π | -π/2 | π | -π/2 | π | -π/2 | π |

Die Komponente $w_1$ des Gewichtungsvektors für die Antenne $A_1$ beträgt immer $w_1=1/\sqrt{2}$.

Herkömmlicherweise ist nur eine Initialisierung des Closed-Loop-Mode 1 im ersten Zeitschlitz eines Rahmens vorgesehen. Sie erfolgt, indem noch vor dem Empfang eines ersten Rückkopplungswortes ein Default-Gewichtungsvektor $W^{(0)}$ mit zweiter Komponente $w_2=½(1+j)$ angenommen wird und nach Empfang des ersten Worts der Rückkopplungsinformation im Zeitschlitz 0 des Uplink-Signals $w_2$ nach folgender Formel berechnet wird

$$w_2 = \frac{\cos(\pi/2) + \cos(\phi_0)}{2} + j\frac{\sin(\pi/2) + \sin(\phi_0)}{2} \qquad (4)$$

wobei $\phi_Q$ entsprechend der obigen Tabelle je nach Wert der Rückkopplungsinformation den Wert 0 oder π annimmt.

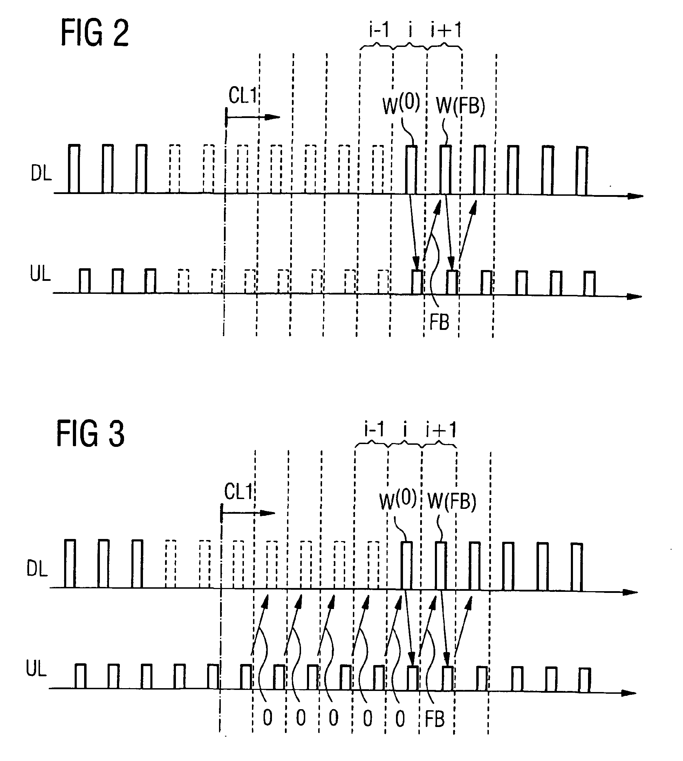

Fig. 2 veranschaulicht den zeitlichen Verlauf von Uplink- und Downlink-Signal beim Übergang in den Closed-Loop-Mode 1 gemäß der vorliegenden Erfindung. Kästchen in der oberen Hälfte des Diagramms der Fig. 2 stellen jeweils Zeitschlitze des von der Basisstation zur Teilnehmerstation übertragenen Downlink-Signals DL dar, wobei ein durchgezogen gezeichnetes Kästchen einen Zeitschlitz bezeichnet, in dem ein Signal gesendet wird und gestrichelte Kästchen Zeitschlitze bezeichnen, in denen die Übertragung des Signals unterbrochen ist, um der Teilnehmerstation Gelegenheit zu geben, Messungen an den Signalen benachbarter Basisstationen durchzuführen. Die untere Hälfte des Diagramms veranschaulicht in entsprechender Weise das Uplink-Signal UL, wobei ebenfalls durchgezogene Kästchen Zeitschlitze bezeichnen, in denen Signal gesendet wird und gestrichelte Kästchen Zeitschlitze bezeichnen, in denen kein Signal gesendet wird. Abwärts gerichtete Pfeile symbolisieren das Senden eines Downlink-Zeitschlitzes im Closed-Loop-Mode; aufwärts gerichtete Pfeile die Übertragung von Rückkopplungsinformation.

Der durch eine vertikale strichpunktierte Linie dargestellte Übergang des Systems in den Closed-Loop-Mode 1 (CL1) fällt in einen Zeitraum, in dem Uplink- und Downlink-Signal unterbrochen sind. Wenn im Zeitschlitz i des Downlink-Signals DL die Basisstation BS wieder zu senden beginnt, hat sie noch keine Rückkopplungsinformation von der Teilnehmerstation MS empfangen. Sie sendet daher in Zeitschlitz i mit dem Default-Gewichtungsvektor $W^{(0)} = (1/\sqrt{2}, (1+j))$.

Während des Zeitschlitzes i des Downlink-Signals DL ist die Teilnehmerstation MS erstmals in der Lage, eine Messung durchzuführen und liefert ein Rückkopplungswort FB, anhand dessen die Basisstation BS eine aktualisierten Gewichtungsvektor w(FB) berechnet, der zum Gewichten des Downlink-Signals im Zeitschlitz i+1 genutzt wird. Die Komponente $w_2$ des Vektors W(FB) wird nach Formel (3) berechnet, wobei ein fiktiver Phasenanpassungswert $\phi_{i-1}$ für den unmittelbar vorhergehenden (i-1)ten Zeitschlitz, in dem noch kein Downlink-Signal gesendet worden ist, gleich π/2 gesetzt wird, wenn i=0, 2, 4, 6, 8, 12 oder 14 ist und gleich 0 gesetzt wird, wenn i=1, 3, 5, 7, 9, 11 oder 13 ist. Auf diese Weise ist eine korrekte Initialisierung des Gewichtungsvektors in jedem beliebigen Zeitschlitz des Rahmens möglich. Mit anderen Worten wird als fiktiver Phasenanpassungswert $\phi_{i-1}$ derjenige Wert gewählt, der sich auch dann ergeben hätte, wenn im Zeitschlitz (i-1) ein den Default-Gewichtungsvektor spezifizierendes Rückkopplungsinformationsbit mit dem Wert 0 übertragen worden wäre.

Fig. 3 veranschaulicht den Fall, dass zum Zeitpunkt des Übergangs in den Closed-Loop-Mode 1 lediglich das Downlink-Signal DL unterbrochen ist, das Uplink-Signal UL jedoch nicht. Wenn in dieser Situation die Basisstation das Uplink-Signal empfängt, so erwartet sie in jedem Zeitschlitz von diesem eine Rückkopplungsinformation zu finden, die Teilnehmerstation MS hat jedoch unmittelbar nach Beginn des Closed-Loop-Mode 1 noch keine Messung am Downlink-Signal durchführen können, aus der sie eine Rückkopplungsinformation ableiten könnte. In dieser Situation überträgt die Teilnehmerstation in jedem Zeitschlitz des Uplink-Signals eine Rückkopplungsinformation mit dem Wert 0. Wie sich anhand von Formel (3) leicht nachvollziehen läßt, ergibt sich aus der Übertragung dieser Rückkopplungsinformation für die Basisstation BS stets der Default-Gewichtungsvektor $W^{(0)}$. Dieser wird daher von der Basisstation BS zum Gewichten des ersten Zeitschlitzes i nach der Unterbrechung eingesetzt. Die Teilnehmerstation MS leitet während des Zeitschlitzes i des Downlink-Signals DL ein Rückkopplungsbit FB ab, das an die Basisstation BS übertragen wird und es dieser ermöglicht, für den Zeitschlitz (i+1) einen aktualisierten Gewichtungsvektor W(FB) zu wählen.

Während der Downlink-Unterbrechung liefert hier die Teilnehmerstation MS gewissermaßen Dummy-Rückkopplungsinformationen, die einen vorgegebenen, nicht auf eine tatsächliche Messung zurückgehenden Inhalt hat. Die Basisstation findet in jedem Zeitschlitz des Uplink-Signals UL, egal, ob er in einer Unterbrechung des Downlink-Signals DL erzeugt worden ist oder nicht, eine auswertbare Rückkopplungsinformation, so dass bei der Auswertung des Uplink-Signals UL nicht zwischen Zeiten, in denen das Downlink-Signal DL regulär gesendet wird, und solchen, in denen es unterbrochen ist, unterschieden werden muss. Da die Basisstation kontinuierlich mit Rückkopplungsinformation versorgt wird, ist eine spezielle Initialisierungsprozedur nach Ende der Unterbrechung nicht notwendig.

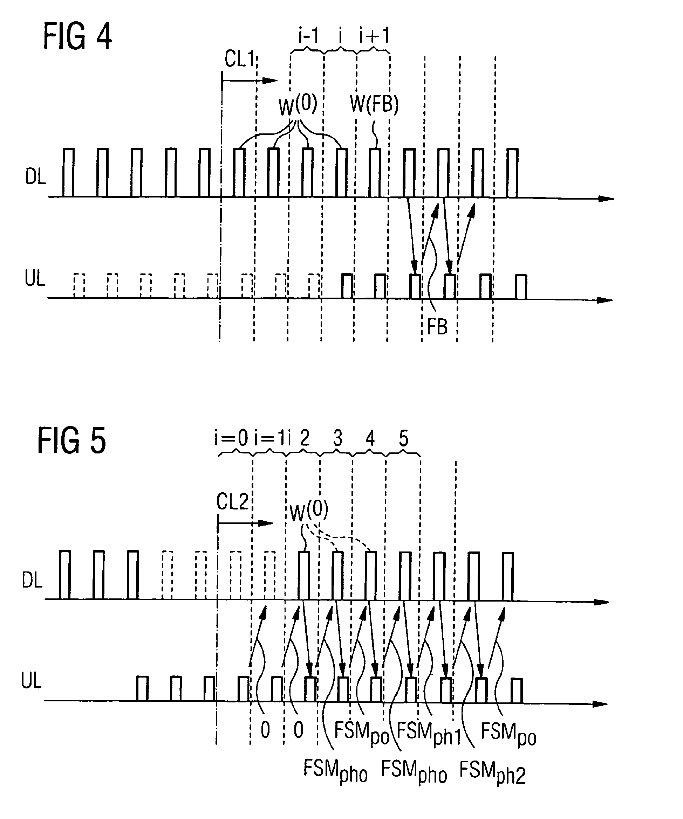

Fig. 4 betrifft den Fall, dass der Wechsel zum Closed-Loop-Mode 1 während einer Unterbrechung des Uplink-Signals UL stattfindet, das Downlink-Signal DL aber normal gesendet wird. So lange die Unterbrechung des Uplink-Signals anhält, bekommt die Basisstation von der Teilnehmerstation keine Rückkopplungsinformation geliefert, auch wenn letztere Signale im Common Pilot Channel (CPICH) des Downlink-Signals empfängt und in der Lage ist, eine Phasenanpassung zu messen. Der erste Zeitschlitz nach der Unterbrechung, in dem die Teilnehmerstation ein Uplink-Signal sendet, ist der Zeitschlitz i. In diesem Zeitschlitz i überträgt die Teilnehmerstation MS die die aktuell aus dem Downlink (CPICH) ermittelte Rückkopplungsinformation FB, und die Basisstation BS legt anhand der Rückkopplungsinformation FB den im Zeitschlitz i+1 des Downlink-Signals verwendeten Gewichtungsvektor W(FB) fest. Diese Festlegung erfolgt in der gleichen Weise abhängig von der Nummer i des Zeitschlitzes, wie oben mit Bezug auf Fig. 2 beschrieben.

Fig. 5 veranschaulicht den Fall, dass eine Umschaltung in den Closed-Loop-Mode 2 (CL2) während einer Unterbrechung des Downlink-Signals erfolgt.

Im Closed-Loop-Mode 2 wird die Rückkopplungsinformation in Form von Vier-Bit-Datenwörtern an die Basisstation BS geliefert, wobei die drei signifikantesten Bits $FSM_{ph}$ eines solchen Datenworts die relative Phasenlage der zwei Komponenten des Gewichtungsvektors spezifizieren und das am wenigsten signifikante Bit $FSM_{po}$ das Verhältnis ihrer Beträge. Die Übertragung eines solchen Vier-Bit-Datenworts kann jeweils nur in den Zeitschlitzen 0, 4, 8, 12 eines UMTS-Rahmens beginnen, wobei das Bit $FSM_{po}$ des im Zeitschlitz 12 beginnenden Datenworts nicht übertragen wird.

Wenn beim Umschalten in den Closed-Loop-Mode 2 jeweils zu Beginn eines Rahmens weder Uplink- noch Downlink-Signal unterbrochen ist, so wird in bekannter Weise zum Senden des Zeitschlitzes 0 (i=0) im Closed-Loop-Mode 2, für den der Basisstation noch keine Rückkopplungsinformation von der Teilnehmerstation vorliegt, ein Standard-Gewichtungsvektor $W^{(0)}=(1/2, -1/2)$ verwendet. In den darauffolgenden Zeitschlitzen des Uplink-Signals UL liefert die Teilnehmerstation MS jeweils der Reihe nach die vier Bits des Rückkopplungsworts. Dabei spezifizieren die drei Phasen-Bits $FSM_{ph}$ des Rückkopplungswortes jeweils Phasendifferenzen zwischen den Antennen $A_1$, $A_2$ gemäß folgender Tabelle

(Tabelle 2)

| $FSM_{ph}$ | Phasendifferenz zwischen Antennen $A_1$, $A_2$ [rad] |
|---|---|
| 000 | $\pi$ |
| 001 | $-3\pi/4$ |
| 011 | $-\pi/2$ |
| 010 | $-\pi/4$ |
| 110 | 0 |
| 111 | $\pi/4$ |
| 101 | $\pi/2$ |
| 100 | $3\pi/4$ |

und das Leistungs-Rückkopplungsbit $FSM_{po}$ ermöglicht die Unterscheidung zwischen folgenden relativen Sendeleistungen der Antennen $A_1$, $A_2$:

(Tabelle 3)

| FSM$_{po}$ | Leistung A$_1$ | Leistung A$_2$ |
|---|---|---|
| 0 | 0,2 | 0,8 |
| 1 | 0,8 | 0,2 |

Die Basisstation BS beginnt noch vor der vollständigen Übertragung des Vier-Bit-Rückkopplungswortes, den verwendeten Gewichtungsvektor anhand der sukzessive übertragenen Rückkopplungsbits gemäß folgender Tabelle zu aktualisieren, wobei in der Tabelle in Strich (-) ein noch nicht gesendetes Bit bezeichnet.

(Tabelle 4)

| FSM$_{ph}$ | Phasendifferenz zwischen Antennen A$_1$, A$_2$ [rad] |
|---|---|
| --- | $\pi$ (entspricht Default-Initialisierungsvektor) |
| 0-- | $\pi$ |
| 1-- | 0 |
| 00- | $\pi$ |
| 01- | $-\pi/2$ |
| 11- | 0 |
| 10- | $\pi/2$ |
| 000 | $\pi$ |
| 001 | $-3\pi/4$ |
| 011 | $-\pi/2$ |
| 010 | $-\pi/4$ |
| 110 | 0 |
| 111 | $\pi/4$ |
| 101 | $\pi/2$ |
| 100 | $3\pi/4$ |

Betrachten wir nun wieder den in Fig. 5 gezeigten Fall, dass zu Beginn eines Rahmens in den Closed-Loop-Mode 2 umgeschaltet worden ist und in den Zeitschlitzen i=0,1 des Downlink-Signals DL nicht gesendet wird. In diesem Fall liefert die Teilnehmerstation MS so lange Rückkopplungsbits mit dem Wert 0 an die Basisstation BS, bis die Downlink-Unterbrechung beendet ist und die Teilnehmerstation MS zum ersten Mal in der Lage ist, eine Messung am CPICH durchzuführen. In dem in der Fig. gezeigten Beispiel liefert die Teilnehmerstation MS in den Zeitschlitzen i=0,1 ein Rückkopplungsbit mit dem Wert 0, was von der Basisstation gemäß obiger Tabelle 4 als eine von der Teilnehmerstation spezifizierte Phasendifferenz zwischen den Antennen A$_1$, A$_2$ von $\pi$ interpretiert wird.

Erst anhand des CPICHs während des Downlink-Zeitschlitzes 2 ist die Teilnehmerstation MS in der Lage, tatsächlich eine Messung durchzuführen.

Gemäß einer ersten Alternative liefert sie als Ergebnis der Messung das in diesem Zeitschlitz 2 von der Basisstation BS als Rückkopplungsinformation erwartete niedrig signifikante Phasenbit FSMph,2 des Rückkopplungs-Datenworts. Die Basisstation BS ignoriert jedoch dieses Phasenbit, genauso wie das in nachfolgendenm Zeitschlitz 3 gelieferte Leistungsbit FSMpo und verwendet weiterhin den Default-Gewichtungsvektor W(0), d.h. sie verhält sich so, als ob anstelle dieser zwei Rückkopplungsbits Nullen gesendet worden wären.

Erst ab dem Zeitschlitz 4, in dem die Teilnehmerstation mit der Übertragung eines neuen, vollständigen Rückkopplungsworts beginnt, fängt die Basisstation an, die gelieferte Rückkopplungsinformation zu berücksichtigen.

Gemäß einer zweiten Alternative könnte auch vorgesehen werden, dass die Teilnehmerstation MS nach Ende einer Unterbrechung des Downlink-Signals DL anstelle restlicher Bits eines angefangenen Rückkopplungs-Datenworts konstant Nullen sendet und erst mit Beginn eines neuen Datenworts, in einem der Zeitschlitze 0, 4, 8 oder 12, beginnt, aktuelle Rückkopplungsinformation zu liefern.

Wenn abweichend von der Darstellung der Fig. 5 die Unterbrechung des Downlink-Signals sich über den Zeitschlitz 3 und eventuell darüber hinaus erstreckt, so liefert die Teilnehmerstation MS auch im Zeitschlitz 3 ein Rückkopplungsbit mit dem Wert 0, und der für den fünften (i=4) Zeitschlitz des Downlink-Signals verwendete Gewichtungsvektor nimmt den Wert W=(0,2; -0,8) an. Dieser Vektor ist mit dem ursprünglich vorgegebenen Gewichtungsvektor (0,5; -0,5) nicht mehr identisch, es ist aber unter den der Basisstation zu Gebote stehenden Gewichtungsvektoren zusammen mit dem Vektor (0,8; -0,2) derjenige, der die größte Ähnlichkeit mit dem vorgegebenen Gewichtungsvektor aufweist. Als Maß der Ähnlichkeit von zwei Vektoren kann z.B. das Skalarprodukt der auf Einheitsbetrag normierten Vektoren herangezogen werden.

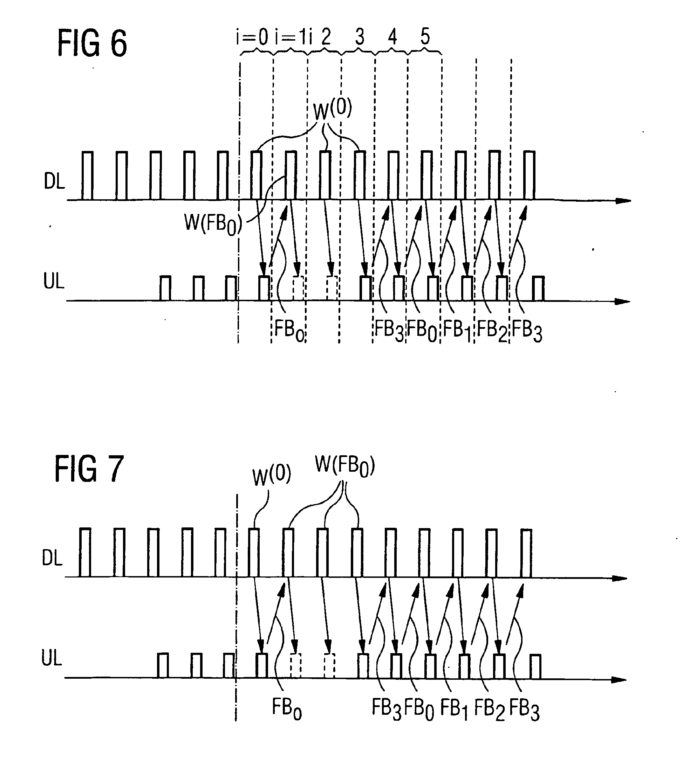

Fig. 6 zeigt eine Uplink-Unterbrechung in Zeitschlitzen i=1, 2 in einem Closed Loop Mode. Während und vor der Übertragung des Downlink-Signals im Zeitschlitz 0 hat die Teilnehmerstation Rückkopplungsinformation ermitteln können; sie liefert ein erstes Bit $FB_0$ davon an die Basisstation im Zeitschlitz 0 des Uplinks vor der Unterbrechung. Dieses wird von der Basisstation in herkömmlicher Weise, wie für Closed Loop Mode 1 und 2 des UMTS-Systems bekannt, ausgewertet. Die Basisstation sendet Im Zeitschlitz 1 des Downlinks mit einem anhand dieses Rückkopplungsbits aktualisierten Gewichtungsvektor $w(FB_0)$. In den darauffolgenden Zeitschlitzen 1, 2 empfängt die Basisstation kein Uplink-Signal und folglich auch keine weitere Rückkopplungsinformation. Die Basisstation verwirft daraufhin das erste Rückkopplungsbit und sendet das Downlink-Signal in den Zeitschlitzen 2 und 3 mit dem Default-Gewichtungsvektor. Im Falle des Closed Loop Mode 1 kann nach Ende der Unterbrechung, mit dem im Uplink-Zeitschlitz 3 übertragenen Rückkopplungsbit $FB_3$, der Gewichtungsvektor in der gleichen Weise aktualisiert werden wie oben für den Fall beschrieben, dass der Übergang in den Closed Loop Mode 1 in eine Uplink-Unterbrechung fällt. Im Falle des Closed Loop Mode 2 ignoriert die Basisstation auch das im Uplink-Zeitschlitz 3 übertragene Rückkopplungsbit $FB_3$ (das hier dem Leistungsbit $FSM_{po}$ entspricht) und wertet erst das im Uplink-Zeitschlitz 4 übertragene Rückkopplungsbit aus.

Fig. 7 zeigt ein alternatives Verfahren für den Closed Loop Mode 2. Die Aktualisierung des Gewichtungsvektors zu $w(FB_0)$ nach Übertragung des Rückkopplungsbits $FB_0$ vor der Unterbrechung erfolgt wie oben mit Bezug auf Fig. 7 beschrieben. Während der Unterbrechung verwendet die Basisstation im Downlink so lange den Gewichtungsvektor $w(FB_0)$, bis sie ein neues erstes Bit $FB_0$ eines weiteren Rückkopplungswortes empfängt. Das letzte Bit $FB_3$ des unvollständig übertragenen Rückkopplungswortes bleibt unberücksichtigt.

Durch Verzögerungen bei der Übertragung (Laufzeiten) und der Berechnung des Gewichtungsvektors ist es möglich, dass die Aktualisierung des Gewichtungsvektors W(FB) aufgrund eines in Zeitschlitz i gesendeten Rückkopplungsbits erst zu Zeitschlitz (i+2) oder auch später erfolgt. Die genannten Verfahren sind hier ebenfalls anwendbar.

## Patentansprüche

**1.** Verfahren zum Betreiben eines zellularen UMTS-Funkkommunikationssystems, mit

einer mehrere Antennen aufweisenden Basisstation, die zwischen einem Betriebszustand ohne Closed-Loop-Antennendiversität und einem Betriebszustand mit Closed-Loop-Antennendiversität, in dem sie ein Downlink-Signal an den einzelnen Antennen jeweils gewichtet mit Komponenten eines Gewichtungsvektors ausstrahlt, umschaltbar ist, und

einer Teilnehmerstation zum Empfangen des Downlink-Signals und Senden eines Uplink-Signals an die Basisstation, wobei die Teilnehmerstation im Betriebszustand mit Closed-Loop-Antennendiversität durch Messungen an dem Downlink-Signal einen Gewichtungsvektor ermittelt, der einen guten Empfang des Downlink-Signals an der Teilnehmerstation gewährleistet und Rückkopplungsinformation an die Basisstation liefert, die den ermittelten Gewichtungsvektor repräsentiert,

bei dem beim Übergang des Funkkommunikationssystems in den Betriebszustand mit Closed-Loop-Antennendiversität die Basisstation das Downlink-Signal während wenigstens eines ersten Zeitschlitzes mit einem vorgegebenen Gewichtungsvektor gewichtet ausstrahlt und dann den Gewichtungsvektor fortlaufend anhand der Rückkopplungsinformation aktualisiert,

**dadurch gekennzeichnet, dass**

die Teilnehmerstation nach Übergang des Funkkommunikationssystems in den Betriebszustand mit Closed-Loop-Antennendiversität an die Basisstation Rückkopplungsinformation liefert, die einen vor dem Übergang in den Betriebszustand mit Closed-Loop-Antennendiversität festgelegten Gewichtungsvektor repräsentiert, bis in einer Messung nach dem Übergang in den Betriebszustand mit Closed-Loop-Antennendiversität ein aktueller Gewichtungsvektor ermittelt worden ist,

dann den aktuellen Gewichtungsvektor repräsentierende Rückkopplungsinformation geliefert wird, und

für den Fall, dass zu dem Zeitpunkt des Übergangs in den Betriebszustand mit Closed-Loop-Antennendiversität die Übertragung des Downlink-Signals unterbrochen ist, die zwischen dem Zeitpunkt des Übergangs in den Betriebszustand mit Closed-Loop-Antennendiversität und der Ermittlung eines aktuellen Gewichtungsvektors gelieferte Rückkopplungsinformation aus Nullen besteht.

**2.** Verfahren nach Anspruch 1, **dadurch gekennzeichnet, dass** die von der Teilnehmerstation nach Übergang des Funkkommunikationssystems in den Betriebszustand mit Closed-Loop-Antennendiversität an die Basisstation gelieferte Rückkopplungsinformation, sofern zu dem Zeitpunkt des Übergangs in den Betriebszustand mit Closed-Loop-Antennendiversität die Übertragung des Downlink-Signals nicht unterbrochen ist, den von der Basisstation verwendeten vorgegebenen Gewichtungsvektor, denjenigen Vektor oder einen der Vektoren aus einem endlichen Satz von verfügbaren Vektoren, der die größte Ähnlichkeit mit dem vorgegebenen Gewichtungsvektor aufweist, oder einen in einer vor dem Umschalten in den Betriebszustand mit Closed-Loop-Antennendiversität durchgeführten Messung erhaltenen Gewichtungsvektor repräsentieren.

**3.** Teilnehmerstation für ein UMTS-Funkkommunikationssystem, zum Empfangen eines Downlink-Signals von einer Basisstation und zum Senden eines Uplink-Signals an die Basisstation, wobei die Teilnehmerstation eingerichtet ist, in einem Betriebszustand mit Closed-Loop-Antennendiversität durch Messungen an dem Downlink-Signal einen Gewichtungsvektor zu ermitteln, der einen guten Empfang des Downlink-Signals an der Teilnehmerstation gewährleistet, und Rückkopplungsinformation an die Basisstation zu liefern, die den ermittelten Gewichtungsvektor repräsentiert,
gekennzeichnet dadurch, dass sie ferner eingerichtet ist, zwischen einem Zeitpunkt des Übergangs in den Betriebszustand mit Closed-Loop-Antennendiversität und dem Abschluss der ersten Messung nach diesem Übergang eine Rückkopplungsinformation an die Basisstation zu liefern, die einen vor dem Zeitpunkt des Übergangs festgelegten Gewichtungsvektor repräsentiert, und
für den Fall, dass zu dem Zeitpunkt des Übergangs in den Betriebszustand mit Closed-Loop-Antennendiversität die Übertragung des Downlink-Signals unterbrochen ist, zwischen dem Zeitpunkt des Übergangs in den Betriebszustand mit Closed-Loop-Antennendiversität und der Ermittlung eines aktuellen Gewichtungsvektors als Rückkopplungsinformation Nullen zu liefern.

## Claims

**1.** Method for operating a cellular UMTS radio communication system with
a base station having multiple antennas, which can be switched between an operating state without closed-loop antenna diversity and an operating state with closed-loop antenna diversity, by said base stations emitting a downlink signal to the individual antennas weighted in each case with components of a weighting vector, and
a user station for receiving the downlink signal and transmitting an uplink signal to the base station, wherein the user station in an operating state with closed-loop antenna diversity determines through measurements on the downlink signal a weighting vector which ensures a good reception of the downlink signal at the user station and delivers back-coupling information to the base station, which back-coupling information represents the determined weighting vector, wherein, on transition of the radio communication system to the operating state with closed-loop antenna diversity, the base station emits the downlink signal during at least a first time slot weighted with a predefined weighting vector, and then updates the weighting vector continuously on the basis of back-coupling information,
**characterised in that**
following transition of the radio communication system to the operating state with closed-loop antenna diversity, the user station supplies back-coupling information to the base station, said back-coupling information representing a weighting vector determined prior to transition into the operating state with closed-loop antenna diversity, until a current weighting vector has been determined in a measurement following the transition in the operating state with closed loop antenna diversity, then back-coupling information representing the current weighting vector is supplied and
in the event of the interruption extending over the time of the transition to the operating state with closed-loop antenna diversity, the back-coupling information supplied between the time of the transition in the operating state with closed-loop antenna diversity and the determination of a current weighting vector consists of zeros.

**2.** Method according to claim 1, **characterized in that** the back-coupling information delivered by the user station following transition of the radio communication system in the operating state with closed-loop antenna diversity to the base station, provided the transmission of the downlink signal is not interrupted at the time of the transition in the operating state with the closed-loop antenna diversity, represents the predetermined weighting vector used by the base station, that vector or one of the vectors from a final set of available vectors, which has the greatest likeness to the predetermined weighting vector, or a weighting vector received in a measurement implemented prior to switching into the operating state with closed-loop antenna diversity.

**3.** User station for a UMTS radio communication system, for receiving a downlink signal from a base station and transmitting an uplink signal to the base station, with the user station being able in an operating state with closed-loop antenna diversity to determine through measurements on the downlink signal a weighting vector which ensures a good reception of the downlink signal at the user station and to deliver back-coupling information to the base station, which back-coupling information represents the determined weighting vector,

**characterized in that** the user station is also set up to deliver back-coupling information to the base station between a time of the transition to the operating state with closed loop antenna diversity and the termination of the first measurement following this transition, said back-coupling information representing a weighting vector determined prior to the time of the transition and

in the event of the interruption extending over the time of the transition to the operating state with closed-loop antenna diversity, the back-coupling information supplied between the time of the transition in the operating state with closed-loop antenna diversity and the determination of a current weighting vector consists of zeros.

**Revendications**

1. Procédé d'exploitation d'un système de radiocommunication cellulaire UMTS, avec
   une station de base comportant plusieurs antennes, laquelle peut être commutée entre un état de fonctionnement sans diversité d'antennes en boucle fermée et un état de fonctionnement avec diversité d'antennes en boucle fermée dans lequel elle émet un signal descendant au niveau des différentes antennes de manière respectivement pondérée avec des composantes d'un vecteur de pondération et
   une station d'usager pour recevoir le signal descendant et envoyer un signal montant à la station de base, la station d'usager, dans l'état de fonctionnement avec diversité d'antennes en boucle fermée, déterminant par des mesures sur le signal descendant un vecteur de pondération qui assure une bonne réception du signal descendant au niveau de la station d'usager et fournit une information de rétroaction à la station de base, laquelle représente le vecteur de pondération déterminé,
   dans lequel, au passage du système de radiocommunication à l'état de fonctionnement avec diversité d'antennes en boucle fermée, la station de base émet le signal descendant pendant au moins un premier créneau temporel de manière pondérée avec un vecteur de pondération prédéterminé et actualise ensuite continuellement le vecteur de pondération à l'aide de l'information de rétroaction,
   **caractérisé en ce que**
   la station d'usager, après le passage du système de radiocommunication à l'état de fonctionnement avec diversité d'antennes en boucle fermée, fournit à la station de base une information de rétroaction qui représente un vecteur de pondération déterminé avant le passage à l'état de fonctionnement avec diversité d'antennes en boucle fermée jusqu'à ce qu'un vecteur de pondération actuel ait été déterminé lors d'une mesure après le passage à l'état de fonctionnement avec diversité d'antennes en boucle fermée,
   ensuite, une information de rétroaction représentant le vecteur de pondération actuel est fournie et,
   pour le cas où la transmission du signal descendant est interrompue à l'instant du passage à l'état de fonctionnement avec diversité d'antennes en boucle fermée, la transmission du signal descendant est interrompue, l'information de rétroaction fournie entre l'instant du passage à l'état de fonctionnement avec diversité d'antennes en boucle fermée et la détermination d'un vecteur de pondération actuel se compose de zéros.

2. Procédé selon la revendication 1, **caractérisé en ce que** l'information de rétroaction fournie par la station d'usager à la station de base après le passage du système de radiocommunication à l'état de fonctionnement avec diversité d'antennes en boucle fermée, dans la mesure où la transmission du signal descendant n'est pas interrompue à l'instant du passage à l'état de fonctionnement avec diversité d'antennes en boucle fermée, représente le vecteur de pondération prédéterminé utilisé par la station de base, le vecteur, ou l'un des vecteurs d'un jeu fini de vecteurs disponibles, qui présente la plus grande similitude avec le vecteur de pondération prédéterminé, ou un vecteur de pondération obtenu lors d'une mesure effectuée avant la commutation vers l'état de fonctionnement avec diversité d'antennes en boucle fermée.

3. Station d'usager pour un système de radiocommunication UMTS destiné à recevoir un signal descendant d'une station de base et à envoyer un signal montant à la station de base, la station d'usager étant aménagée pour déterminer, dans un état de fonctionnement avec diversité d'antennes en boucle fermée, par des mesures sur le signal descendant, un vecteur de pondération qui assure une bonne réception du signal descendant au niveau de la station d'usager et pour fournir une information de rétroaction à la station de base, laquelle représente le vecteur de pondération déterminé, **caractérisée en ce qu'**elle est en outre aménagée pour, entre un instant du passage à l'état de fonctionnement avec diversité d'antennes en boucle fermée et la terminaison de la première mesure après ce passage, fournir une information de rétroaction à la station de base, laquelle représente un vecteur de pondération déterminé avant l'instant du passage, et pour, pour le cas où, à l'instant du passage à l'état de fonctionnement avec diversité d'antennes en boucle fermée, la transmission du signal descendant est interrompue, fournir, entre l'instant du passage à l'état de fonctionnement avec diversité d'antennes en boucle fermée et la détermination d'un vecteur de pondération actuel, des zéros en tant qu'information de rétroaction.

# FIG 1

FIG 2

i-1 i i+1

CL1

W(0) W(FB)

DL

UL

FB

FIG 3

i-1 i i+1

CL1

W(0) W(FB)

DL

UL

0 0 0 0 0 FB

# FIG 4

DL

UL

CL1

$\overbrace{\phantom{xx}}^{i-1}$ $\overbrace{\phantom{x}}^{i}$ $\overbrace{\phantom{xx}}^{i+1}$

W(0)

W(FB)

FB

# FIG 5

$\overbrace{\phantom{x}}^{i=0}$ $\overbrace{\phantom{x}}^{i=1}$ $\overbrace{\phantom{x}}^{i\ 2}$ $\overbrace{\phantom{xx}}^{3}$ $\overbrace{\phantom{xx}}^{4}$ $\overbrace{\phantom{xx}}^{5}$

CL2

W(0)

DL

UL

0     0     $FSM_{po}$   $FSM_{ph1}$   $FSM_{po}$

$FSM_{pho}$   $FSM_{pho}$   $FSM_{ph2}$

## FIG 6

## FIG 7